# EUROPEAN PATENT APPLICATION

(11) **EP 0 780 733 A1**
(43) Date of publication of application: **25.06.1997**
(21) Application number: 95120296.9
(22) Date of filing: 21.12.1995
(51) Int. Cl.: G03G 9/08, C08F 2/56, C08F 297/00

(54) **Polymerization multiblock copolymer process and compositions thereof**

(71) Applicant: XEROX CORPORATION, Rochester New York 14644 (US)
(72) Inventor: Moffat, Karen A., Brantford, Ontario, CA N3P 1N2 (CA); Kazmaier, Peter M., Mississauga, Ontario, CA L5L 1E5 (CA); Georges, Michael K., Guelph, Ontario, CA N1G 3N8 (CA); Hamer, Gordon K., Mississauga, Ontario, CA L5L 2P4 (CA); Veregin, Richard P.N., Mississauga, Ontario, CA L5L 5C3 (CA); Saban, Marko D., Etobicoke, Ontario, CA M9B 4N1 (CA)
(74) Representative: Grünecker, Kinkeldey, Stockmair & Schwanhäusser Anwaltssozietät

(57) **Abstract**

A free radical polymerization process for the preparation of a block copolymer thermoplastic resin or resins comprising:
heating a first mixture comprised of a free radical initiator, a stable free radical agent, and at least one polymerizable monomer compound to form a first intermediate product resin;
cooling said first mixture;
isolating said first intermediate product resin;
adding to said first intermediate product resin a second mixture comprised of at least one polymerizable monomer compound, wherein said polymerizable monomer compound of said second mixture is different from said polymerizable monomer compound of said first mixture, and wherein there is formed a combined mixture;
heating said combined mixture to form a third mixture comprised of a block copolymer thermoplastic resin comprised of a first product resin formed from said first intermediate product resin and added said second monomer;
cooling said third mixture;
isolating said block copolymer thermoplastic resin from said third mixture; and
optionally washing and drying said block copolymer thermoplastic resin, and wherein said heating is accomplished at a temperature of from about 40 to about 100°C in the presence of ultrasonic irradiation.

## Description

### BACKGROUND OF THE INVENTION

The present invention relates to processes for the preparation of polymers, including homopolymers, random copolymers, block copolymers, functionally activated polymers, and the like, and, more specifically, to a polymerization process and to the polymers formed thereby, and especially to processes for the preparation of multiblock, such as copolymers of styrene acrylates. In embodiments, the present invention relates to a stable free radical moderated process for generating a thermoplastic polymer resin or resins, that have narrow polydispersities, that is narrow molecular weight distributions as indicated by the ratio M_{w}/Mₙ, where M_{w} is the weight average molecular weight and Mₙ is the number average molecular weight, and easily controllable modality, from at least one monomer compound comprising heating for an effective period of time a mixture of a free radical initiator, a stable free radical agent, and at least one polymerizable monomer compound in the presence of ultrasonic irradiation under conditions such that all polymer chain formations are initiated at about the same time; cooling the mixture to effectively terminate the polymerization; isolating the thermoplastic resin product; and optionally washing and drying the polymer resin product. With the processes of the present invention in embodiments, the temperature can be low, for example from about 40 to about 100°C. The polymer resins generated by the process of the present invention in embodiments are essentially monomodal and in embodiments by repeating the heating and ultrasonic irradiation steps, that is the combined initiation and polymerization step, there is provided a means for obtaining mixtures of monomodal polymer resins that are compositionally the same resin type having characteristics of both narrow polydispersity and known or selectable modality. In embodiments, the process of the present invention provides a means for conducting bulk or neat free radical polymerization processes on multikilogram or larger scales. The aforementioned embodiments may be accomplished in a one or single pot reactor environment. Further, in embodiments polymeric chain growth proceeds by a pseudoliving mechanism and can provide thermoplastic resins of variable molecular weights from very low to very high, for example less than about 2,000 up to about 300,000, or greater, while maintaining narrow molecular weight distributions or polydispersities of, for example, about 1.05 to about 1.95 and wherein the monomer to polymer conversion is high, for example at least about 50 percent, and more specifically, from about 50 to about 99 to 100 percent. Moreover, in embodiments block copolymers can be synthesized by the aforementioned stable free radical moderated free radical polymerization processes, wherein each block formed is, for example, well defined in length by the reacted monomer, and wherein each block formed possesses a narrow molecular weight distribution and wherein the block copolymer is substantially 100 percent block copolymer and not contaminated with the formation of homopolymer of the second monomer. The formation of the homopolymer of the second block monomer is a possible competing reaction which occurs in other prior art processes such as in Otsu's iniferter prior art mentioned herein.

One method to prepare polymers or copolymers having a narrow molecular weight distribution or polydispersity is by anionic processes. The use and availability of resins having narrow polydispersities in industrial applications is limited primarily since anionic polymerization processes are performed in the absence of atmospheric oxygen and moisture, require difficult to handle and hazardous initiator reagents, and consequently, such polymerization processes are generally limited to small batch reactors. In addition, the monomers and solvents that are used must be of high purity and anhydrous rendering the anionic process more costly than alternatives which do not have these requirements. It is, therefore, desirable to provide a free radical polymerization process that would provide narrow molecular weight distribution resins without the disadvantages of the aforementioned anionic polymerization processes.

Free radical polymerization processes are chemically less sensitive to impurities in the monomers or solvents typically used, and are completely insensitive to water. There has been a long felt need for an economical free radical polymerization process which is suitable for preparing narrow polydispersity resins by suspension, solution, bulk or neat, emulsion and related processes, and which polymerization process provides resins that can undergo further reaction to provide a number of resins, especially thermoplastic resins.

Copolymers prepared by free radical polymerization processes inherently have broad molecular weight distributions or polydispersities, generally greater than about four. One reason is that free radical initiators have half lives that are relatively long, from several minutes to many hours, and polymeric chains are not all initiated at the same time and wherein the initiators provide growing chains of various lengths at any time during the polymerization process. Also, the propagating chains in a free radical process can react with each other in processes known as coupling and disproportionation, both of which are chain terminating reactions, thus chains of varying lengths are terminated at different times during the reaction process which results in resins comprised of polymeric chains which vary widely in length from very small to very large. For a free radical polymerization process to be effectively enabled for providing narrow molecular weight distributions, then all polymer chains are to be initiated at about the same time and premature termination by coupling or disproportionation processes must be minimized or avoided.

Otsu et.al., in *Makromol Chem*., *Rapid Commun*., 3, 127 (1982), discloses the use of iniferters as a means of producing block copolymers by a free radical polymerization process. A mechanism proposed for the reaction suggested that a pseudoliving propagating free radical chain exists and that it continues to grow with time. There are two primary major drawbacks associated with using iniferters. Iniferters tend to react very slowly and the percent conversion or degree of polymerization of monomer to polymer is low, for example about 40 percent even after 20 hours of reaction time; and the free radical trap that caps the end of the growing chain has the ability to initiate new chains at any time during the course of the reaction, see for example S.R. Turner, R.W. Blevins, in *Polymer Reprints*,*_*29(2), Sept. 1988. This initiation results in new chains being initiated at various times during the polymerization and consequently results in a broadening of the polydispersity. The processes of the aforementioned Otsu reference are not believed to be applicable to the synthesis of narrow molecular weight distribution resins, particularly for polymers with high molecular weights.

The use of stable free radicals are known as inhibitors of free radical polymerizations, see for example, G. Moad et.al., *Polymer Bulletin* 6*,* 589 (1982). Studies by, for example, G. Moad et.al. *J.Macromol. Sci-Chem*., A17(1), 51(1982) have reported on the use of stable free radicals as inhibitors of free radical polymerizations performed at low temperatures, for example below 90°C. Little is known concerning the reaction of stable free radical agents at higher temperatures and at high monomer to polymer conversions.

In a hypothetical free radical polymerization of styrene in which chains are continually initiated over the course of the polymerization, and where chain termination by coupling processes is also occurring, calculations as described in, for example, G. Odian, *Principles of Polymerization*, pages 280 to 281, 2nd Ed., John Wiley & Sons, 1981 have shown that the narrowest polydispersity that one can theoretically obtain is 1.5. In practice, polydispersities much greater than 1.5 are actually obtained. Wide polydispersities of between 2.0 and 2.4 are typical for free radical homopolymerizations of styrene. With copolymer systems, polydispersities of greater than 4 are generally obtained. The stable free radical polymerization processes of the instant invention enable narrow polydispersities of between about 1.05 to about 2, and specifically about 1.1 to about 1.3 for polystyrene, and as low as 1.5 for various copolymer styrene acrylates. Also, the stable free radical polymerization systems of the present invention permit polydispersities that are comparable to those obtained in anionic polymerizations.

U.S. Patent 4,581,429 to Solomon et al. discloses a free radical polymerization process which controls the growth of polymer chains to provide primarily short chain or oligomeric homopolymers and copolymers including block and graft copolymers. The process employs an initiator reaction product having the formula (in part) = N-O-X, where X is a free radical species capable of polymerizing unsaturated monomers. The molecular weights of the polymer products obtained are generally, for example, from about 2,500 to about 7,000 having polydispersities generally of about 1.4 to about 1.8, at low monomer to polymer conversion. The reactions typically have low conversion rates, use relatively low reaction temperatures of less than about 100°C, and use multiple stages. Reference to the working Examples of this patent indicate temperatures of less than 100°C, one M_{w}/Mₙ ratio of apparently 1.15 (if the polymerization was allowed to continue similar to the other Examples it is believed that the polydispersity would probably broaden and be greater than 1.15), and wherein the Mₙ was 3,200 and the conversion was low, 1.4 to 1.8, and wherein the calculated nonreported conversion rates are low, for example 22 percent or lower. With the aforementioned processes, it is believed that thermoplastic polymers were not obtained. In Example 23 where there was an attempt to increase the degree of polymerization up to n = 70, the temperature was increased to 120°C for 1.5 hours and there resulted a low molecular weight polymer of Mₙ = 6,700 and a broad polydispersity of 1.82. In Example 25 there was employed additional heating at 140°C for 2 hours to increase the degree of polymerization up to 22 which is still low and not in the region for the material to be considered a polymer. No molecular weight data was given in Example 25. Also in Example 29 the mixture was heated to 120°C for 0.5 hour and n was only 11.

In U.S. Patent 5,322,912, the disclosure of which is totally incorporated herein by reference, there is illustrated a free radical polymerization process for the preparation of a thermoplastic resin or resins comprising:
heating a mixture of a free radical initiator, a stable free radical agent, and at least one polymerizable monomer compound to form the thermoplastic resin or resins with a high monomer to polymer conversion;
cooling the mixture;
isolating the thermoplastic resin or resins; and
washing and drying the thermoplastic resin or resins, and more specifically, a free radical polymerization process for the preparation of a thermoplastic resin or thermoplastic resins comprising:
   heating at a temperature of at least 100°C, and in embodiments from about 120 to about 160°C, a mixture of a free radical initiator, a stable free radical agent, and at least one polymerizable monomer to form the thermoplastic resin or thermoplastic resins with a high monomer to resin or resins conversion of at least about 50 percent and with polydispersity of from about 1.05 to about 1.95;
   cooling the mixture. By employing ultrasonic irradiation to the above free radical polymerization process, the temperature of polymerization can be lowered from about 120 to about 160°C to about 40 to about 100°C. The length of polymerization time to obtain high conversion of monomer to polymer can be decreased from about greater than 20 hours to about 3 to about 7 hours depending on temperature, volume and scale of the reaction.

U.S. Patent 5,059,657 discloses a polymerization process for acrylic and maleimide monomers by contacting the monomers with a diazotate, cyanate or hyponitrite, and N-chlorosuccinimide, N-bromosuccinimide or a diazonium salt. The polymer produced can initiate further polymerization, including use in block copolymer formation.

U.S. Patent 5,312,871 discloses a radical polymerization process for the preparation of narrow molecular weight distribution polymers which involves polymerizing a vinyl monomer or monomers with an initiator or initiating system comprising an alkyl or aryl metal, a strongly binding monodentate, bidentate or polydentate ligand and a stable oxy free radical. The initiating system of patent 5,312,871 is very complex, consisting of three components; an alkyl or aryl metal and a binding ligand (monodentate, bidentate or polydentate material), plus the stable oxy free radical. Examples of the alkyl or aryl metal are triisobutyl aluminum, diisobutyl aluminum hydride, dichloro ethyl aluminum, diethyl zinc, butyl lithium and phenyl magnesium bromide. Examples of the binding ligands are triphenylphosphine, bipyridyl, dimethylglyoxime and porphyrin. Examples of stable oxy free radical are TEMPO and galvinoxyl. The polymerization process is typically performed in a solvent media such as benzene, toluene or hexane at temperatures in the range of 0°C to 100°C.

In free radical polymerization reaction processes of the prior art, with the exception of the patent 5,322,912, various significant problems exist, for example difficulties in predicting or controlling the polydispersity and modality of the polymers produced. These free radical polymerization processes usually provide polymers with high weight average molecular weights (M_{w}) and low number average molecular weights (Mₙ) resulting in broad polydispersities, or oligomers. Further, bulk or neat free radical polymerization processes of the prior art are prone to generating excessive quantities of heat since the polymerization reaction is exothermic and as the viscosity of the reaction medium increases dissipation of heat becomes more difficult. This is referred to as the Trommsdorff effect as discussed and illustrated in *Principles of Polymerization*, G. Odian, 2nd Ed., Wiley-Interscience, N.Y., 1981, page 272, the disclosure of which is entirely incorporated herein by reference. Moreover, the exothermic nature of free radical polymerization processes is often a limitation that severely restricts the concentration of reactants or the reactor size upon scale up.

Further, gel body formation in conventional free radical polymerization processes may result in a broad molecular weight distribution and/or difficulties encountered during filtering, drying and manipulating the product resin. These and other disadvantages are avoided, or minimized with the processes of the present invention.

It is known to form resins by bead suspension polymerization, reference, for example, U.S. Patents 4,601,968 and 4,609,607, the disclosures of which are totally incorporated herein by reference.

Illustrated in U.S. Patent 5,274,057, the disclosure of which is totally incorporated herein by reference, is that free radical suspension polymerization reactions may also lead to undesirable deposits of polymer on the agitator, baffles, heating coils and reactor walls. In some situations, the suspension coalesces during the reaction producing large deposits of undesirable polymeric gel material which is difficult, expensive and hazardous to remove from the reactor.

Illustrated in copending application U.S. Serial No. 242,490, filed the disclosure of which is totally incorporated herein by reference, is polymerization process for the preparation of homopolymeric acrylate containing thermoplastic resin or resins comprising:
heating a mixture comprised of a free radical initiator, an oxo nitroxide stable free radical agent, at least one polymerizable acrylate monomer compound, and optionally a solvent, to form a homopolymeric acrylate containing thermoplastic resin or resins with a high monomer to polymer conversion and a narrow polydispersity.

Illustrated in copending application U.S. Serial No. (not yet assigned - D/94635), filed concurrently herewith, the disclosure of which is totally incorporated herein by reference, is a free radical polymerization process for the preparation of thermoplastic resin comprising:
heating a mixture of a free radical initiator, a stable free radical agent, and at least one polymerizable monomer compound, and wherein said heating is accomplished at a temperature of from about 40 to about 100°C in the presence of ultrasonic irradiation;
cooling said mixture; and optionally
isolating said thermoplastic resin, and washing and drying said thermoplastic resin.

Also mentioned are commonly owned and assigned copending applications U.S. Serial No. 08/181,134 (D/92579D), filed January 4, 1994; U.S. Serial No. 08/307,192 (D/92581), filed March 25, 1993; continuation-in-part of U.S. Serial No. 07/976,604, now U.S. Patent 5,322,912 (D/92579) filed November 16, 1992, U.S. Serial No. 08/214,518, (D/92579I) filed March 18, 1994; and U.S. Serial No. 08/223,418, (D/93729) filed April 4, 1994.

The disclosures of the above mentioned patents, publications, and copending applications are incorporated herein by reference in their entirety.

Thus, there remains a need for processes for the preparation of narrow polydispersity polymeric resins by economical and scalable free radical polymerization techniques, and which polymers retain many or all of their desirable physical properties, for example hardness, low gel content, processability, clarity, high gloss durability, and the like, while avoiding the problems of gel formation, exotherms, volume limited and multistage reaction systems, purification, performance properties of the polymer resin products, and the like associated with prior art free radical polymerization methodologies. Also, with the processes of the present invention low temperatures can be selected and the rate of polymerization can be increased, thus, for example, the reaction time required to attain about 90 percent conversion or more is less than 6 to 7 hours and preferably about 3 to 5 hours by employing ultrasonic irradiation.

The thermoplastic resin products of the present invention can be selected for a number of uses, such as toner, developers, and more specifically, as toner resins for electrophotographic imaging processes or where monomodal or mixtures of monomodal narrow molecular weight resins or block copolymers with narrow molecular weight distribution within each block component are suitable such as in thermoplastic films and coating technologies.

### SUMMARY OF THE INVENTION

Examples of objects of the present invention include:

An object of the present invention is to provide processes and polymers that overcome many of the problems and disadvantages of the aforementioned prior art.

Another object of the present invention is to provide a free radical polymerization reaction system which affords narrow polydispersity homopolymeric or copolymeric thermoplastic resin products with ultrasonic energy, and wherein low temperatures, such as from about 40 to about 100, and, more specifically, from about 50 to about 70°C can be selected.

Another object of the present invention is to provide a free radical polymerization reaction system which affords narrow polydispersity homopolymeric or copolymeric thermoplastic resin products with ultrasonic energy wherein the rate of polymerization is increased so that the required time to polymerize the monomer to polymer is diminished.

In another object of the present invention there is provided a free radical polymerization reaction system which may be conducted in the presence or absence of conventional reaction media.

Further, in another object of the present invention there are provided living stable free radical polymerization processes utilizing ultrasonic energy for initiation, and wherein, for example, ultrasonic energy is applied to the polymerization of monomers, thereby lowering the polymerization temperature, and wherein homopolymers, and block copolymers can be generated.

In yet another object of the present invention, coupling or disproportionation termination reactions are prevented by reversibly terminating the propagating free radical chains with a stable free radical agent which serves to moderate the free radical polymerization process.

In another object of the present invention there is provided the acceleration of the dissociation of the free radical peroxide initiator by the addition of promoter compounds which include, for example, tertiary amines, which ensure that all polymeric chains are initiated nearly simultaneously or about the same time, and wherein low temperatures can be selected.

In another object of the present invention there can be selected the addition of small amounts of organic acids in a molar ratio of stable free radical to organic acids in the range of about 100:1 to about 1:1 and preferably in the range of about 20:1 to about 5:1, which acids include for example, sulfonic, phosphoric or carboxylic acids like benzoic acid, camphor sulfonic acid; and a nitroxide stable radical that contains an acidic functional group, such as 2,2,5,5-tetramethyl-3-carboxyl-1-pyrrolidinyloxy, to increase the rate of reaction by at least 3 times without broadening the polydispersity of the polymeric resins.

Still another object of the present invention is to prepare thermoplastic resins by single pot processes employing a monomer or monomers, a suitable azo or peroxide free radical initiator, and a stable free radical agent.

Another object of the present invention is to prepare resins using polymerization processes wherein the molecular weight of the growing homopolymer or copolymer chains increase over the entire time period of the polymerization reaction, and wherein the percent conversion or degree of polymerization of monomer to polymer with respect to time or number average molecular weight is approximately linear, that is, polymerization processes which occur without the aforementioned Trommsdorff effect.

In objects of the present invention there are provided processes for the preparation of resins with a M_{w}/Mₙ ratio of from about 1.05 to about 1.95, and preferably from about 1.1 to about 1.6 at low temperatures, preferably from about 40 to about 100°C, and wherein a high conversion of monomer to polymer is enabled, for example at least 50 percent and from about 50 to about 100, or 50 to 95 percent.

Additionally, in another object of the present invention there are provided stable free radical polymerization processes for obtaining homopolymers, such as homopolymers of styrene, random copolymers, block copolymers, multiblock copolymers, and the like, such as specifically styrene acrylates, styrene methacrylates, styrene butadienes, and generally A, AA, AB, BA, AAA, ABA, BAB, AABBAB, ABC, homopolymers and copolymers can be obtained with the processes of the present invention in various embodiments thereof.

These and other objects of the present invention can be accomplished in embodiments by a free radical polymerization process effected at low temperatures and with ultrasonic irradiation. More specifically, the processes of the present invention comprise a free radical polymerization process comprising heating at low temperature and in the presence of ultrasonic energy, a mixture of a free radical initiator, a stable free radical agent, and at least one polymerizable monomer compound to form thermoplastic resin or resins with a high monomer to polymer conversion; cooling the mixture; optionally isolating the thermoplastic resin or resins; and optionally washing and drying the thermoplastic resin or resins, and wherein the thermoplastic resin or resins possess a narrow polydispersity of, for example, from about 1.05 to about 1.95, and preferably from about 1.1 to about 1.6.

Embodiments of the present invention are directed to a free radical polymerization process for the preparation of thermoplastic resins comprising heating a first mixture comprised of a free radical initiator, a stable free radical agent, and at least one polymerizable monomer compound to form a first intermediate product resin; optionally cooling the first mixture; adding to the first intermediate product resin a second mixture comprised of a free radical initiator, a stable free radical agent, and at least one polymerizable monomer compound, wherein the polymerizable monomer or monomers of the second mixture is the same as the polymerizable monomer or monomers of the first mixture, and the free radical initiator and the stable free radical agent of the second mixture are the same or different from the free radical initiator and the stable free radical agent of the first mixture to form a combined mixture; heating the combined mixture at low temperature and in the presence of ultrasonic energy to form a third mixture comprised of a mixture of thermoplastic resins comprised of a first product resin formed from the first intermediate product resin and added the second monomer or monomers and a second product resin formed from the second monomer or monomers; cooling the third mixture; optionally isolating the mixture of thermoplastic product resins from the third mixture; and optionally washing and drying the mixture of thermoplastic resins, and wherein the first product resin and the second product resin each possess a narrow polydispersity, and the mixture of thermoplastic resins possesses a modality equal to about 1 to about 2. Higher modalities, for example, of from about 3 to about 20 may be conveniently achieved if desired by the subsequent addition of effective amounts of fresh, or new mixtures of monomer or monomers, free radical initiator and stable free radical agent prior to a final cooling and isolation step.

Further, in embodiments of the present invention there is provided a free radical polymerization process for the preparation of a block copolymer thermoplastic resin or resins comprising heating at a low temperature of about 40 to 100°C and in the presence of ultrasonic energy a first mixture comprised of a free radical initiator, a stable free radical agent, and at least one polymerizable monomer compound to form a first intermediate product resin; cooling the first mixture; isolating the first intermediate product resin; adding to the first intermediate product resin a second mixture comprised of at least one (when preparing a block copolymer there is usually added one monomer at a time, followed by polymerization, then the addition of the next monomer; thus the number of steps or times different monomers can be added is numerous but each time only one monomer is added) polymerizable monomer compound, wherein the polymerizable monomer compound of the second mixture is different from the polymerizable monomer compound of the first mixture to form a combined mixture; heating at low temperature and in the presence of ultrasonic energy the combined mixture to form a third mixture comprised of a block copolymer thermoplastic resin comprised of a first product resin formed from the first intermediate product resin and added the second monomer; cooling the third mixture; optionally isolating the block copolymer thermoplastic resin from the third mixture; and optionally washing and drying the block copolymer thermoplastic resin, and wherein the block copolymer possesses a narrow polydispersity and a modality equal to 1. The isolation of the intermediate product resin is preferred when highest purity and block integrity or homogeneity is desired, that is, residual unreacted monomer or monomers of the first mixture may subsequently react with and be integrated into the growing polymer chain formed from the second mixture of polymerizable monomer compounds. Thus, in preparing block copolymers by processes of the instant invention isolation by, for example, precipitation of intermediate products of polymerization reactions is preferred when high purity is desired or when the degree of polymerization is less than about 70 to 90 percent for a block or multiblock polymerization reaction.

In yet another embodiment of the present invention there is provided a free radical polymerization process for the preparation of a thermoplastic resin comprising heating at a temperature of from about 40 to about 100°C in the presence of ultrasonic irradiation for an effective period of from about 30 minutes to about 6 hours using either an ultrasonic bath supplying medium intensity ultrasonic energy of about 20 to about 50 kHz with a power of about 200 to about 400 Watts or a titanium horn supplying medium intensity ultrasonic energy of about 20 to about 50 kHz with a power of about 200 to about 450 Watts, a water suspension mixture of a peroxide free radical initiator, a nitroxide stable free radical agent, and at least one polymerizable monomer compound to form the thermoplastic resin with a high monomer to polymer conversion, that is at least about 50 percent; cooling the mixture; isolating the thermoplastic resin; and optionally washing and drying the thermoplastic resin, and wherein the thermoplastic resin possesses a narrow polydispersity of about 1.1 to about 1.6 and in embodiments a modality of 1.

The present invention includes the following embodiments:
a free radical polymerization process for the preparation of thermoplastic resin comprising:
heating a mixture of a free radical initiator, a stable free radical agent, and at least one polymerizable monomer compound, and wherein said heating is accomplished at a temperature of from about 40 to about 100°C in the presence of ultrasonic irradiation;
cooling the mixture; and
isolating said thermoplastic resin, and washing and drying the thermoplastic resin;
a free radical polymerization process for the preparation of a thermoplastic resin or thermoplastic resins comprising:
   heating a mixture of a free radical initiator, a stable free radical agent, and at least one polymerizable monomer to form said thermoplastic resin or thermoplastic resins with a high monomer to resin or resins conversion of at least about 50 percent and which resin or resins possess an excellent polydispersity of from about 1.05 to about 1.95, wherein said heating is accomplished at a temperature of from about 40 to about 100°C in the presence of ultrasonic irradiation; and
   cooling the mixture;
   a free radical polymerization process for the preparation of thermoplastic resin comprising:
      heating a first mixture comprised of a free radical initiator, a stable free radical agent, and at least one polymerizable monomer compound to form a first intermediate product resin;
      optionally cooling the first mixture;
      adding to the resulting first intermediate product resin a second mixture comprised of a free radical initiator, a stable free radical agent, and at least one polymerizable monomer compound, wherein said polymerizable monomer compound of said second mixture contains the same components as said polymerizable monomer compound of said first mixture, and said free radical initiator and said stable free radical agent of said second mixture are the same as or different from said free radical initiator and said stable free radical agent of said first mixture, and wherein there is formed a combined mixture;
      heating said combined mixture to form a third mixture comprised of a mixture of thermoplastic resins comprised of a first product resin formed from said first intermediate product resin and added said second monomer and a second product resin formed from said second monomer;
      cooling said third mixture;
      and wherein said first product resin and said second product resin each possess a narrow polydispersity of from about 1.05 to about 1.95, and wherein said heating is accomplished at a temperature of from about 40 to about 100°C in the presence of ultrasonic irradiation;
      a free radical polymerization process for the preparation of bimodal thermoplastic resin comprising:
         heating at a temperature of from about 40 to about 100°C in the presence of ultrasonic irradiation a first mixture comprised of a free radical initiator, a stable free radical agent, and at least one polymerizable monomer compound to form a first intermediate product resin;
         optionally cooling said first mixture;
         adding to said first intermediate product resin a second mixture comprised of a free radical initiator, a stable free radical agent, and at least one polymerizable monomer compound, wherein said polymerizable monomer compound of said second mixture contains the same components as said polymerizable monomer compound of said first mixture, and said free radical initiator and said stable free radical agent of said second mixture are the same or different from said free radical initiator and said stable free radical agent of said first mixture, and wherein there is formed a combined mixture;
         heating at a temperature of from about 40 to about 100°C in the presence of ultrasonic irradiation and for a period of from about 30 minutes to about 6 hours said combined mixture to form a third mixture comprised of a mixture of thermoplastic resins comprised of a first product resin formed from said first intermediate product resin and added said second monomer and a second product resin formed from said second monomer;
         cooling said third mixture;
         optionally isolating said mixture of thermoplastic product resins from said third mixture; and
         optionally washing and drying said mixture of thermoplastic resins, and wherein said first product resin and said second product resin each possess a narrow polydispersity obtained in excellent conversion, which conversion is from about 50 to about 90 percent and which polydispersity is from about 1.1 to about 1.8;
         a process for the preparation of resin which comprises heating at a temperature of from about 40 to about 100°C in the presence of ultrasonic irradiation a mixture of free radical initiator, stable free radical agent, and a least one monomer component, which resin has a polydispersity of from about 1.05 to about 1.95, and the monomer to resin conversion is at least about 50 percent; a polymerization process which provides homoacrylate and copolymeric acrylate resin products which possess narrow polydispersity properties and which polymerization processes proceed with high monomer to polymer conversion; an acrylate polymerization process which yields homoacrylate and copolymers containing homoacrylate segments having number average molecular weights (Mₙ) above about 100 to about 1,000 and having a polydispersity ratio of the weight average molecular weight (M_{w}) to the number average molecular weight (Mₙ) of from about 1.0 to about 2.0 and preferably from about 1.1 to about 1.6, and wherein in embodiments there can be selected as the stable free radical agent 4-oxo-2,2,6,6-tetramethyl-1-piperidinyloxy, (4-oxo-TEMPO).

The present invention provides in embodiments a pseudoliving polymerization process that enables the synthesis of narrow polydispersity homoacrylate and copolymeric acrylate resins from acrylate and acrylate derivative monomers. The process can, in embodiments, use known free radical initiators in combination with an oxygenated stable free radical agent and acrylate monomers to afford narrow polydispersity homoacrylate and copolymeric acrylate resins.

In embodiments of the aforementioned processes, polymer or copolymer resin compositions are obtained wherein the product resin or resins has a weight average molecular weight (M_{w}) of from about 2,000 to 300,000 and a number average molecular weight (Mₙ) of from about 1,800 to about 153,000 and a polydispersity of about 1.05 to about 1.95 and, more specifically, wherein the M_{w}/Mₙ is from about 1.1 to about 1.6, from about 1.1 to about 1.5, or from about slightly greater than 1 to about 1.6.

Although not being desired to be limited by theory, it is believed that when the polymerization reaction processes of the present invention are performed at low bulk temperature in the presence of ultrasonic energy the mechanical forces or vibrational energy creates pressure waves within the reaction mixture. This action forms millions of microscopic bubbles or cavities which expand during the negative pressure excursion and implode violently during the positive excursion. This phenomenon is referred to as cavitation which produces the powerful shearing action at the tip of the ultrasonic probe, horn, such as a Cole-Parmer Ultrasonic Homogenizer, 4710 horn or an ultrasonic bath with water, such as the Branson Model 5200. During high intensity ultrasonic irradiation, the temperature within a given localized area increases significantly, for example from about several tens to about several hundreds of degrees. These high localized temperatures, while maintaining a low bulk temperature for the overall system, will break the weaker chemical bonds such as the oxygen-oxygen bond of peroxide initiators to enable fast, or rapid initiation of the polymer chains. In addition, this high localized temperature also affects the weaker chemical bonds of the growing polymer chain such as the bond between the carbon atom of the growing chain and the oxygen atom of the nitroxide radical. This bond breaks and the additional monomer is inserted and polymerization continues. The ultrasonic energy employed depends on the initiator used, and to permit all the polymer chains to be initiated at about the same time which is a primary reason for enabling forming polymer chain products having narrow polydispersities. The undesirable chain coupling or disproportionation termination reactions, so prevalent under the conditions of some of the prior art free radical polymerization systems, is suppressed with the processes of the present invention because the effective concentration and availability of living free chains is extremely small. In addition, stable free radical agents of the present invention do not initiate polymerization thus new chains are not initiated after an initial period during which all polymer chains are initiated at about the same time.

Propagating chains of the present invention are referred to as pseudoliving because the stable free radical agent adds to a propagating chain and the chain is temporarily, but reversibly, terminated. As shown in the accompanying scheme, the propagating polymer chain fluctuates or is in an equilibrium condition between being temporarily terminated or suspended, and being alive or living. As thermal energy is supplied from the reaction system to the bond joining the growing polymeric chain and the stable free radical (●SFR) agent, that is, the adduct in the accompanying scheme where, for example, the stable free radical agent (●SFR) is covalently bound to the propagating chain, for example a substituted styrene, homolytically cleaves thereby temporarily generating a living chain end radical species shown in square brackets[] permitting another monomer unit or units to insert or add to the chain and is again instantaneously, albeit short lived as determined by diffusion control, terminated or protected by the stable free radical agent as a thermally labile adduct. The free radical initiator, for example benzoyl peroxide, is represented in the scheme as ●INIT. The term protected refers to the chain radical species, that is available for selective rather than indiscriminant further reaction with monomer. An unmoderated free radical polymerization chain, that is a free radical polymerization process without a stable free radical agent present, in contrast has a reactive or open chain end throughout its lifetime.

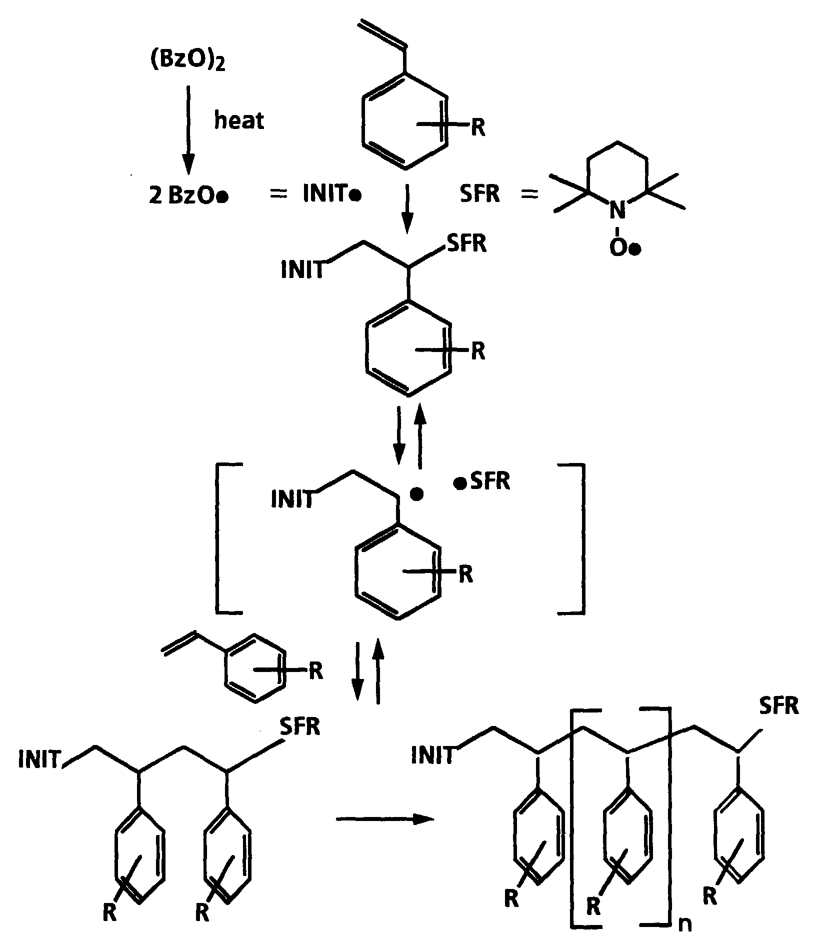

Processes of the present invention further comprises in embodiments a means for sequentially repeating the monomer addition or polymerization step, and with additional stable free radical and free radical initiator of the process being added, N times, to provide a well defined mixture of thermoplastic resins wherein each resin in the mixture is comprised of polymers having discrete and narrow polydispersities, and wherein the mixture has a modality equal to N+1 wherein N is the number of times the addition step of initiator, stable free radical agent and monomer is repeated.

The present invention provides several specific advantages in embodiments as follows.

With the process of the present invention, polymer product polydispersities are narrow, and can be varied from between approximately 1.05 to approximately 1.95 depending on the monomer/comonomer system by varying the ratio of stable free radical agent to free radical initiator molar concentration. When the polymerization process conditions of the present invention are attempted without using the SFR additive, broad molecular weight resins with a polydispersity of between 2 and 6 are obtained.

The stable free radical agent moderated polymerization reactions may be accomplished in a variety of media, for example suspension, emulsion, bulk, that is neat or without solvent, or in aqueous or nonaqueous solution, using preferably higher boiling solvents, such as toluene and xylene.

During the reaction of monomer or mixed monomers to form polymers, the reaction time may vary, for example about 1 to about 60 hours, preferably between about 2 to 10 hours, and optimally about 4 to 7 hours. The optimal reaction time may vary depending upon the temperature, the volume and scale of the reaction, and the quantity and type of polymerization initiator and stable free radical agent selected. The polymerization reaction temperature is retained relatively constant throughout the heating step by providing an adjustable external heat source and the temperature is maintained at from about 40°C to about 100°C, and preferably between about 50°C and about 75°C.

The free radical initiator selected can be any free radical polymerization initiator capable of initiating a free radical polymerization process and includes peroxide initiators, such as benzoyl peroxide and azo initiators such as azobisisobutyronitrile, and the like with benzoyl peroxide being preferred. The initiator concentration employed is about 0.2 to 6 weight percent of the total weight of monomer to be polymerized and is determined by the desired molecular weight of the resin. As the initiator concentration is decreased relative to the weight of molar equivalents of monomer used, the molecular weight of the thermoplastic resin product increases. This free radical initiator is added as a separate component to the reaction mixture and is not reacted with the stable free radical agent prior to use thereof in the processes illustrated herein.

Examples of stable free radical agents, or components that can be selected include nitroxide free radicals, like for example, proxyl (2,2,5,5-tetramethyl-1-pyrrolidinyloxy), 3-carboxyl-proxyl, 3-carbamoyl-proxyl, 2,2-dimethyl-4,5-cyclohexyl-proxyl, 3-oxo-proxyl, 3-hydroxylimine-proxyl, 3-aminomethyl-proxyl, 3-methoxy-proxyl, 3-t-butyl-proxyl, 3-maleimido-proxyl, 3,4-di-t-butyl-proxyl, 3-carboxylic-2,2,5,5-tetramethyl-1-pyrrolidinyloxy and the like, and derivatives thereof, and TEMPO (2,2,6,6-tetramethyl-1-piperidinyloxy), 4-benzoxyloxy-TEMPO, 4-methoxy-TEMPO, 4-carboxylic-4-amino-TEMPO, 4-chloro-TEMPO, 4-hydroxylimine-TEMPO, 4-hydroxy-TEMPO, 4-oxo-TEMPO, 4-oxo-TEMPO-ethylene ketal, 4-amino-TEMPO, 2,2,6,6-tetraethyl-1-piperidinyloxy, 2,2,6-trimethyl-6-ethyl-1-piperidinyloxy and the like, and derivatives thereof, and dialkyl nitroxide radicals such as di-t-butyl nitroxide, diphenyl nitroxide, t-butyl-t-amyl nitroxide and the like, and derivatives thereof, and DOXYL (4,4-dimethyl-1-oxazolidinyloxy), 2-di-t-butyl-doxyl, 5-decane-doxyl, 2-cyclohexane-doxyl, and the like, and derivatives thereof, and 2,5-dimethyl-3,4-dicarboxylic-pyrrole, 2,5-dimethyl-3,4-diethylester-pyrrole, 2,3,4,5-tetraphenyl-pyrrole and the like, and 3-cyano-pyrroline-3-carbamoyl-pyrroline, 3-carboxylic-pyrroline and the like; 1,1,3,3-tetramethylisoindolin-2-yloxyl and 1,1,3,3-tetraethylisoindolin-2-yloxyl and the like; porphyrexide nitroxyl radicals such as 5-cyclohexyl porphyrexide nitroxyl and 2,2,4,5,5-pentamethyl-Δ³-imidazoline-3-oxide-1-oxyl and the like, and galvinoxyl and the like; 1,3,3-trimethyl-2-azabicyclo[2,2,2]octane-5-one-2-oxide and 1-azabicyclo[3,3,1]nonane-2-oxide and the like; and with TEMPO being preferred. These stable free radical agent materials are known in the literature, for example G. Moad et.al., *Tetrahedron Letters, 22*, 1165 (1981) as free radical polymerization inhibitors. However, under the polymerization conditions of the present invention the stable free radical agents function primarily as moderators to harness the normally highly reactive and indiscriminate intermediate free radical species. Nitroxides include N,N-disubstituted nitroxides such as Fremy's salt.

The molar ratio of the stable free radical (SFR) agent to free radical initiator (INIT) is from about 2.5 to 0.5, and preferably in the range from about 2.0 to 0.9. Although not desired to be limited by theory, in embodiments, the molar ratio [SFR:INIT] of stable free radical agent, for example TEMPO, to free radical initiator, for example benzoyl peroxide, of about 1.3 to 1 is believed to be important. In embodiments, when the [SFR:INIT] is too high then the reaction rate can be decreased. When the [SFR:INIT] is too low, then the reaction product may have undesired increased polydispersity. Also, when styrene is polymerized to polystyrene without the stable free radical agent of the instant process the product polymers isolated have polydispersities of 2.0 and above.

In embodiments, the molar ratio of monomer content to stable free radical agent to free radical initiator is from about 10:0.5:1 to about 10,000:5:1 and preferably in the range of about 300:1.3:1 to about 7,000:1.3:1. Of importance in embodiments, especially with regard to the polymerizaton of styrene, is a molar ratio of stable free radical to initiator of from about 1.3 to about 1. For monomers other than styrenes, such as acrylates, similar ratios are selected, that is 1.3:1.

Processes of the present in embodiments provide for high monomer to polymer conversion rates, or degrees of polymerization, for example of 90 percent by weight or greater and, more specifically, from about 75 to about 100 percent in embodiments. Further, the processes of the present invention in embodiments provide for relatively high weight average molecular weights of the polymer product, from weight average molecular weights ranging from about 2,000 to about 300,000 and preferred ranges of from about 2,000 to about 250,000. In embodiments with the process of the present invention, polymers with M_{w} of about 500,000 can be obtained.

The monomers selected include those capable of undergoing a free radical polymerization, and include, but are not limited to styrene, substituted styrenes and derivatives thereof, for example α-methylstyrene, 4-methylstyrene, butadiene and any conjugated diene monomer sufficiently reactive under the specified stable free radical moderated polymerization reaction conditions to afford a stable free radical reaction adduct and high molecular weight polymer product, for example isoprene and myrcene, acrylates, and derivatives thereof. Examples of polymers obtained include styrenes, acrylates, styrene acrylates, styrene butadienes, and the like. The acrylate polymerization of the present invention reactions can in embodiments be supplemented with a solvent or cosolvent to help ensure that the reaction mixture remains a homogeneous single phase throughout the monomer conversion. Any solvent or cosolvent may be selected providing that the solvent media is effective in permitting a solvent system which avoids precipitation or phase separation of the reactants or polymer products until after all polymerization reactions have been completed. Exemplary solvent or cosolvent include polymer product compatible aliphatic alcohols, glycols, ethers, glycol ethers, pyrrolidines, N-alkyl pyrrolidinones, N-alkyl pyrrolidones, polyethylene glycols, polypropylene glycols, amides, carboxylic acids and salts thereof, esters, organosulfides, sulfoxides, sulfones, alcohol derivatives, hydroxyether derivatives such as butyl CARBITOL® or CELLOSOLVE®, amino alcohols. ketones, and the like, derivatives thereof, and mixtures thereof. Specific examples include ethylene glycol, propylene glycol, diethylene glycol, glycerine, dipropylene glycol, tetrahydrofuran, and the like, and mixtures thereof. When mixtures of water and water soluble or miscible organic liquids are selected as the reaction media, the water to cosolvent weight ratio typically ranges from about 100:0 to about 10:90, and preferably from about 97:3 to about 25:75.

The polymerization reaction rate of the monomers may in embodiments be accelerated and the reaction time reduced to about 4 to 7 hours from greater than 16 hours by the addition of a catalytic amount of a protic acid that will not also initiate cationic polymerization, and which acid is selected from the group consisting of organic acids such as sulfonic, phosphoric, carboxylic acids and nitroxides containing acid functional groups such as 3-carboxyl-proxyl, and wherein camphor sulfonic acid is a preferred acid. The molar ratio of stable free radical to acid can vary, and, for example, can be from about 100:1 to 1:1 with a preferred ratio of between about 20:1 and 5:1. Excessive addition of organic acid beyond the aforementioned amounts may in embodiments cause the resin polydispersity to broaden.

The stable free radical moderated polymerization process of the present invention may be repeated a number of times within the same reaction vessel by the delayed and stepwise addition of more monomer or monomers with varying amounts of initiator and stable free radical agent to form a mixture of monomodal resins where each component has a distinct molecular weight and has a narrow molecular weight distribution, and wherein the mixture has a modality of N+1, where N represents the number of additional times that monomer, initiator and stable free radical agent are added.

By cooling, which can be accomplished by terminating the heating source, such as an oil bath, and removing the vessel from the oil bath and permitting it to cool on its own while maintaining stirring, the polymerization reaction attains ambient temperature and the stable free radical moderated reaction is effectively quenched or terminated. Each new or subsequent addition of monomer, stable free radical and initiator accompanied by heating with ultrasound provides a new polymeric species having a narrow molecular weight distribution, and each new polymer species continues to grow independent of the other polymer species previously formed.

Alternatively, block copolymer resins may also be prepared whereby after each desired block has been formed a new monomer or monomers is added without the addition of more initiator or stable free radical agent to form a new block wherein each block component is well defined in length and has a narrow molecular weight distribution, and having properties depending on the repeated sequence and the monomers chosen for incorporation.

Additional optional known additives may be selected in the polymerization reactions, and which may provide additional performance enhancements to the resulting product, for example colorants, lubricants, release or transfer agents, surfactants, stabilizers, antifoams, and the like.

Polymer resins possessing discrete mixture of monomodal, that is a well defined multimodal molecular weight distribution may in embodiments thereof provide several advantages, particularly for electrophotographic toner compositions, such as melt rheology properties including improved flow and elasticity; and improved performance properties such as triboelectrification, admix rates and shelf life stabilities.

The processes of the present invention can be selected to form a wide variety of polymers. For example, it can be used to polymerize a styrene monomer to form polystyrene, butadiene to form polybutadiene or n-butyl acrylate to form poly(n-butyl acrylate). The process of the present invention can be selected to polymerize a mixture of two or more different polymerizable monomers to form copolymers therefrom, for example polymerization of styrene and butadiene to form poly(styrene-butadiene), styrene and isoprene to form poly(styrene-isoprene), styrene and ethyl acrylate to form poly(styrene-ethylacrylate), and the like, and combinations thereof, including copolymers and terpolymers.

A suitable reaction medium employed for conducting processes of the instant invention includes bulk or neat, suspension, emulsion, and solution systems.

In embodiments, there can be incorporated into the monomer a waxy component, such as alkylenes like polyethylene, polypropylene waxes, and mixtures thereof, having a low molecular weight of from between about 1,000 to about 20,000. The use of such a component may be desirable for certain toner applications. Suitable low molecular weight waxes, such as polyethylene and polypropylene, are disclosed in U.S. Patent 4,659,641, the disclosure of which is totally incorporated herein by reference.

Toner compositions can be prepared by a number of known methods, such as admixing and heating resin particles obtained with the processes of the instant invention, such as styrene butadiene copolymers, pigment particles such as magnetite, carbon black, or mixtures thereof, and cyan, yellow, magenta, green, brown, red, or mixtures thereof, and preferably from about 0.5 percent to about 5 percent of charge enhancing additives in a toner extrusion device, such as the ZSK53 available from Werner Pfleiderer, and removing the formed toner composition from the device. Subsequent to cooling, the toner composition is subjected to grinding utilizing, for example, a Sturtevant micronizer for the purpose of achieving toner particles with a volume median diameter of less than about 25 microns, and preferably of from about 6 to about 12 microns, which diameters are determined by a Coulter Counter. Thereafter, the toner compositions can be classified utilizing, for example, a Donaldson Model B classifier for the purpose of removing toner fines, that is toner particles less than about 4 microns volume median diameter.

Illustrative examples of suitable toner resins obtained with the processes of the present invention that can be selected for toner and developer compositions include styrene acrylates, styrene butadienes, vinyl resins, including homopolymers and copolymers of two or more vinyl monomers; vinyl monomers include styrene, p-chlorostyrene, butadiene, isoprene, and myrcene; vinyl esters like esters of monocarboxylic acids including methyl acrylate, ethyl acrylate, n-butyl acrylate, isobutyl acrylate, dodecyl acrylate, 2-ethylhexyl acrylate, n-octyl acrylate, phenyl acrylate, acrylonitrile, methacrylonitrile, acrylamide, and the like. Preferred toner resins include styrene butadiene copolymers, mixtures thereof, and the like. Other preferred toner resins include styrene/acrylate copolymers, PLIOLITES®, and suspension polymerized styrene butadienes, reference U.S. Patent 4,558,108, the disclosure of which is totally incorporated herein by reference.

In toner compositions, the resin particles are present in a sufficient but effective amount, for example from about 60 to about 90 weight percent. Thus, when 1 percent by weight of a charge enhancing additive is present, and 8 percent by weight of pigment or colorant, such as carbon black, is contained therein, about 91 percent by weight of resin is selected. Also, the charge enhancing additive may be coated on the pigment particle. When used as a coating, the charge enhancing additive is present in an amount of from about 0.1 weight percent to about 5 weight percent, and preferably from about 0.3 weight percent to about 1 weight percent.

Numerous well known suitable pigments or dyes can be selected as the colorant for the toner particles including, for example, carbon black like REGAL 330®, nigrosine dye, aniline blue, magnetite, or mixtures thereof. The pigment, which is preferably carbon black, should be present in a sufficient amount to render the toner composition highly colored. Generally, the pigment particles are present in amounts of from about 1 percent by weight to about 20 percent by weight, and preferably from about 2 to about 10 weight percent based on the total weight of the toner composition; however, lesser or greater amounts of pigment particles can be selected.

When the pigment particles are comprised of magnetites, thereby enabling single component toners in some instances, which magnetites are a mixture of iron oxides (FeO·Fe₂O₃) including those commercially available as MAPICO Black, they are present in the toner composition in an amount of from about 10 percent by weight to about 70 percent by weight, and preferably in an amount of from about 10 percent by weight to about 50 percent by weight. Mixtures of carbon black and magnetite with from about 1 to about 15 weight percent of carbon black, and preferably from about 2 to about 6 weight percent of carbon black, and magnetite, such as MAPICO BLACK®, in an amount of, for example, from about 5 to about 60, and preferably from about 10 to about 50 weight percent can be selected.

There can also be blended with the toner compositions of the present invention external additive particles including flow aid additives, which additives are usually present on the surface thereof. Examples of these additives include fumed silicas, such as AEROSIL®, metal salts and metal salts of fatty acids inclusive of zinc stearate, aluminum oxides, cerium oxides, and mixtures thereof, which additives are generally present in an amount of from about 0.1 percent by weight to about 5 percent by weight, and preferably in an amount of from about 0.1 percent by weight to about 1 percent by weight. Several of the aforementioned additives are illustrated in U.S. Patents 3,590,000 and 3,800,588, the disclosures of which are totally incorporated herein by reference.

With further respect to the present invention, fumed silicas, such as AEROSIL®, can be surface treated with the charge additives in an amount of from about 1 to about 30 weight percent and preferably 10 weight percent, followed by the addition thereof to the toner in an amount of from 0.1 to 10 and preferably 0.1 to 1 weight percent.

Also, there can be included in the toner compositions low molecular weight waxes, such as polypropylenes and polyethylenes commercially available from Allied Chemical and Petrolite Corporation, EPOLENE N-15® commercially available from Eastman Chemical Products, Inc., VISCOL 550-P®, a low weight average molecular weight polypropylene available from Sanyo Kasei K.K., and similar materials. The commercially available polyethylenes selected have a molecular weight of from about 1,000 to about 1,500, while the commercially available polypropylenes utilized for the toner compositions are believed to have a molecular weight of from about 4,000 to about 5,000. Many of the polyethylene and polypropylene compositions useful in the present invention are illustrated in British Patent No. 1,442,835, the disclosure of which is totally incorporated herein by reference.

The low molecular weight wax materials are present in the toner composition or the polymer resin beads of the present invention in various amounts, however, generally these waxes are present in the toner composition in an amount of from about 1 percent by weight to about 15 percent by weight, and preferably in an amount of from about 2 percent by weight to about 10 percent by weight, and may in embodiments function as fuser roll release agents.

Encompassed within the scope of the present invention are colored toner and developer compositions comprised of toner resin particles, carrier particles, the charge enhancing additives illustrated herein, and as pigments or colorants red, blue, green, brown, magenta, cyan and/or yellow particles, as well as mixtures thereof. More specifically, with regard to the generation of color images utilizing a developer composition with charge enhancing additives, illustrative examples of magenta materials that may be selected as pigments include, for example, 2,9-dimethyl-substituted quinacridone and anthraquinone dye identified in the Color Index as Cl 60710, Cl Dispersed Red 15, diazo dye identified in the Color Index as Cl 26050, Cl Solvent Red 19, and the like. Illustrative examples of cyan materials that may be used as pigments include copper tetra-4-(octadecyl sulfonamido) phthalocyanine, X-copper phthalocyanine pigment listed in the Color Index as Cl 74160, Cl Pigment Blue, and Anthrathrene Blue, identified in the Color Index as Cl 69810, Special Blue X-2137, and the like; while illustrative examples of yellow pigments that may be selected are diarylide yellow 3,3-dichlorobenzidene acetoacetanilides, a monoazo pigment identified in the Color Index as Cl 12700, Cl Solvent Yellow 16, a nitrophenyl amine sulfonamide identified in the Color Index as Foron Yellow SE/GLN, Cl Dispersed Yellow 33, 2,5-dimethoxy-4-sulfonanilide phenylazo-4'-chloro-2,5-dimethoxy acetoacetanilide, and Permanent Yellow FGL. The aforementioned pigments are incorporated into the toner composition in various suitable effective amounts providing the objectives of the present invention are achieved. In one embodiment, these colored pigment particles are present in the toner composition in an amount of from about 2 percent by weight to about 15 percent by weight calculated on the weight of the toner resin particles.

For the formulation of developer compositions, there are mixed with the toner particles carrier components, particularly those that are capable of triboelectrically assuming an opposite polarity to that of the toner composition. Accordingly, the carrier particles are selected to be of a negative polarity enabling the toner particles, which are positively charged, to adhere to and surround the carrier particles. Illustrative examples of carrier particles include iron powder, steel, nickel, iron, ferrites including copper zinc ferrites, and the like. Additionally, there can be selected as carrier particles nickel berry carriers as illustrated in U.S. Patent 3,847,604, the disclosure of which is totally incorporated herein by reference. The selected carrier particles can be used with or without a coating, the coating generally containing terpolymers of styrene, methylmethacrylate, and a silane, such as triethoxysilane, reference U.S. Patent 3,526,533, U.S. Patent 4,937,166, and U.S. Patent 4,935,326, the disclosures of which are totally incorporated herein by reference, including for example KYNAR® and polymethylmethacrylate mixtures (40/60). Coating weights can vary as indicated herein; generally, however, from about 0.3 to about 2, and preferably from about 0.5 to about 1.5 weight percent coating weight is selected.

Furthermore, the diameter of the carrier particles, preferably spherical in shape, is generally from about 50 microns to about 1,000 microns, and in embodiments about 70 to about 175 microns thereby permitting them to possess sufficient density and inertia to avoid adherence to the electrostatic images during the development process. The carrier component can be mixed with the toner composition in various suitable combinations, however, best results are obtained when about 1 to about 5 parts per toner to about 10 parts to about 200 parts by weight of carrier are selected.

The toner composition of the present invention can be prepared by a number of known methods as indicated herein including extrusion melt blending the toner resin particles obtained with the processes of the present invention, pigment particles or colorants, and a charge enhancing additive, followed by mechanical attrition. Other methods include those well known in the art such as spray drying, melt dispersion, and extrusion processing. Also, as indicated herein the toner composition without the charge enhancing additive in the bulk toner can be prepared, followed by the addition of charge additive surface treated silicas.

The toner and developer compositions may be selected for use in electrostatographic imaging apparatuses containing therein conventional photoreceptors providing that they are capable of being charged positively or negatively. Thus, the toner and developer compositions can be used with layered photoreceptors that are capable of being charged negatively, such as those described in U.S. Patent 4,265,990, the disclosure of which is totally incorporated herein by reference. Illustrative examples of inorganic photoreceptors that may be selected for imaging and printing processes include selenium; selenium alloys, such as selenium arsenic, selenium tellurium and the like; halogen doped selenium substances; and halogen doped selenium alloys. Flexible layered imaging members with charge transport and photogenerating layers can be selected for the imaging and printing processes.

The toner compositions are usually jetted and classified subsequent to preparation to enable toner particles with a preferred average diameter of from about 5 to about 25 microns, and more preferably from about 8 to about 12 microns. Also, the toner compositions preferably possess a triboelectric charge of from about 0.1 to about 2 femtocoulombs per micron as determined by the known charge spectrograph. Admix time for toners is preferably from about 5 seconds to 1 minute, and more specifically from about 5 to about 15 seconds as determined by the known charge spectograph. These toner compositions with rapid admix characteristics enable, for example, the development of images in electrophotographic imaging apparatuses, which images have substantially no background deposits thereon, even at high toner dispensing rates in some instances, for instance exceeding 20 grams per minute; and further, such toner compositions can be selected for high speed electrophotographic apparatuses, that is those exceeding 70 copies per minute.

Also, the toner compositions prepared from resins of the present invention possess desirable narrow charge distributions, optimal charging triboelectric values, preferably of from 10 to about 50, and more preferably from about 10 to about 35 microcoulombs per gram as determined by the known Faraday Cage methods with from about 0.1 to about 5 weight percent in one embodiment of the charge enhancing additive; and rapid admix charging times as determined in the charge spectrograph of less than 15 seconds, and more preferably in embodiments from about 1 to about 14 seconds.

The following Examples are being supplied to further define various species of the present invention, it being noted that these Examples are intended to illustrate and not limit the scope of the present invention. Parts and percentages are by weight unless otherwise indicated. Comparative Examples are also provided.

In all of the process Examples, except Comparative Example I an ultrasonic irradiation source was utilized as illustrated in Example 1 and the low temperature was between 40 and 70°C. Comparative Examples and data are also presented.

### COMPARATIVE EXAMPLE 1

### Suspension Free Radical Polymerization of Styrene Without A Stable Free Radical Agent:

A suspension of tricalcium phosphate (3.0 grams) in a solution of Alkanol (48 milligrams), a naphthalene sulfonate available from DuPont, in water (100 milliliters) was added to a modified Parr reactor and the reactor was heated to 80°C over 30 minutes while it was purged with nitrogen. A solution of benzoyl peroxide (2.0 grams, 0.008 mol) in styrene (78 grams, 0.75 mol) was added to the reactor under 60 pounds per square inch of nitrogen and the reaction was continued at 80°C for three hours and twenty minutes. The reaction was then heated to 95°C and continued at that temperature for an additional two hours and twenty minutes. Samples (0.5 to 1.0 gram in Examples unless otherwise indicated) were removed from the reactor at the time interval or reaction time in minutes indicated in Table 1, cooled, treated with concentrated nitric acid to dissolve the suspending agent, rinsed with water and dried. The molecular weight properties of the intermediate materials and the final polystyrene product are shown in Table 1. Polydispersity (M_{w}/Mₙ) is indicated in the column labeled PD.

**TABLE 1**

| **Comparative Example 1 Samples** | **Wt. SFR (grams)** | **Reaction Time (min.)** | **M**_{**n**} **(10**^{**-3**}**)** | **M**_{**w**} **(10**^{**-3**}**)** | **PD** |
|---|---|---|---|---|---|
| 1a | 0 | 60 | 18.9 | 33.0 | 1.75 |
| 1b | 0 | 120 | 17.9 | 32.8 | 1.83 |
| 1c | 0 | 200 | 16.4 | 32.0 | 1.95 |
| 1d | 0 | 280 | 13.0 | 30.6 | 2.36 |

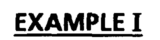

### Bulk Polymerization of Styrene with a Stable Free Radical Agent (TEMPO) via Ultrasonic Irradiation:

Into a 500 milliliter metal beaker equipped with an oil bath under the beaker to heat the solution is added styrene monomer (15 grams, 0.144 mol), benzoyl peroxide (0.052 gram, 0.215 millimol) and the stable nitroxide radical, TEMPO (0.045 gram, 0.288 millimol). The temperature of the solution is heated to 60°C and then a 300 Watt model ultrasonic horn (Cole-Parmer Ultrasonic Homogenizer 4710 horn) is placed in the monomer solution and the power control setting is turned on to setting number 9 for 30 minutes. As the ultrasonic energy is applied to the monomer solution, the metal beaker is moved around in the oil bath to provide adequate mixing of the solution during the polymerization. At this stage, a sample of the solution is taken and then the ultrasonic energy is continued for an additional 30 minutes. This polymerization procedure is continued for a total of 4 hours. Samples (0.5 to 1.0 gram in Examples unless otherwise indicated) are removed from the reaction mixture every 30 minutes and the molecular weight properties of the polystyrene product are determined. The Mₙ for the polystyrene is 30,826, the M_{w} is 38,965, and the PD, polydispersity, is 1.26. The Mₙ and M_{w} are evaluated using a Hewlett Packard Gel Permeation Chromotograph, Model HP1090, with a refractive index detector, HP1047A, calibrated with polystyrene standards, ranging from 2,000,000 to 500 daltons.

Example 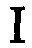 demonstrates that the reaction can be conveniently accomplished in the absence of a solvent or in bulk. The molar ratio of TEMPO to benzoyl peroxide is 1.3:1 which is an optimum ratio. This Example also illustrates that the overall reaction temperature for the moderated free radical polymerization of styrene can be accomplished at a lower reaction temperature and in a shorter time period while still producing a polymer with an excellent high molecular weight.

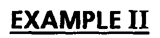

### Bulk Polymerization of n-Butyl Acrylate with a Stable Free Radical Agent (4-oxo-TEMPO) via Ultrasonic Irradiation:

Into a 500 milliliter metal beaker equipped with an oil bath under the beaker to heat the solution is added n-butyl acrylate monomer (15 grams, 0.117 mol), azobisisobutyronitrile (AIBN) (0.050 gram, 0.291 millimol) and the stable nitroxide radical, 4-oxo-TEMPO (0.085 gram, 0.500 millimol). The temperature of the solution is heated to 50°C and then a 300 Watt model ultrasonic horn is placed in the monomer solution and the power control setting is turned on to setting number 9 for 30 minutes. As the ultrasonic energy is applied to the monomer solution, the metal beaker is moved around in the oil bath to provide adequate mixing of the solution during the polymerization. At this point, a sample (0.5 to 1.0 grams) of the solution is removed using a pipette, and then the ultrasonic energy is continued for an additional 30 minutes. This polymerization procedure is continued for a total of 4 hours. Samples of 0.5 to 1.0 gram are removed from the reaction mixture every 30 minutes and the molecular weight properties of the poly(n-butyl acrylate) product are determined. The Mₙ for the poly(n-butyl acrylate) product is 7,939, the M_{w} is 12,247, and the PD, polydispersity, is 1.54. The Mₙ and Mw are evaluated using a Hewlett Packard Gel Permeation Chromotograph, Model HP1090, with a refractive index detector, HP1047A, calibrated with polystyrene standards, ranging from 2,000,000 to 500 daltons.

Example 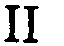 demonstrates that the reaction can be conveniently accomplished in the absence of a solvent or in bulk. The molar ratio of TEMPO to benzoyl peroxide is 1.7:1, which is not believed to be an optimized ratio for this Example, which optimized ratio would enable a narrower polydispersity than the 1.54 obtained. This Example also illustrates that the overall reaction temperature for the moderated free radical polymerization of n-butyl acrylate can be accomplished at a low reaction temperature and in a short time period.

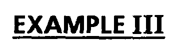

### Magnetic Toner Preparation and Evaluation:

The polymer resin (74 weight percent of the total mixture) obtained by the stable free radical polymerization processes in Example 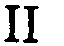 may be melt extruded with 10 weight percent of REGAL 330® carbon black and 16 weight percent of MAPICO BLACK® magnetite at 120°C, and the extrudate pulverized in a Waring blender and jetted to 8 micron number average sized particles. A positively charging magnetic toner may be prepared by surface treating the jetted toner (2 grams) with 0.12 gram of a 1:1 weight ratio of AEROSIL R972® (Degussa Chemicals) and TP-302, a naphthalene sulfonate and quaternary ammonium salt (Nachem/Hodogaya SI) charge control agent.

Developer compositions may then be prepared by admixing 3.34 parts by weight of the aforementioned toner composition with 96.66 parts by weight of a carrier comprised of a steel core, 98 microns in diameter with a polymer mixture thereover containing 70 percent by weight of KYNAR®, a polyvinylidene fluoride, and 30 percent by weight of polymethyl methacrylate; the coating weight being about 0.9 percent. Cascade development may be used to develop a Xerox Model D photoreceptor using a "negative" target. The light exposure may be set between 5 and 10 seconds and a negative bias used to dark transfer the positive toned images from the photoreceptor to paper.

Fusing evaluations may be accomplished with a Xerox 5028® soft silicone roll fuser, operated at 3 inches per second.

The minimum fix and hot offset temperatures (in °F) of stable free radical polymerization polymers having narrow polydispersities as toners are expected to be improved over toners prepared from resins synthesized by a free radical polymerization process without a stable free radical agent present affording broad polydispersities. The actual fuser roll temperatures may be determined using an Omega pyrometer and were checked with wax paper indicators. The degree to which a developed toner image adhered to paper after fusing is evaluated using a Scotch® tape test. The fix level is expected to be excellent and comparable to that fix obtained with toner compositions prepared from other methods for preparing toners having resins with high molecular weights and narrow polydispersities. Typically greater than 95 percent of the toner image remains fixed to the copy sheet after removing a tape strip as determined by a densitometer.

Images may be developed in a xerographic imaging test fixture with a negatively charged layered imaging member comprised of a supporting substrate of aluminum, a photogenerating layer of trigonal selenium, and a charge transport layer of the aryl amine N,N'-diphenyl-N,N'-bis(3-methylphenyl)1,1'-biphenyl-4,4'-diamine, 45 weight percent, dispersed in 55 weight percent of the polycarbonate MAKROLON®, reference U.S. Patent 4,265,990, the disclosure of which is totally incorporated herein by reference; and images with toner compositions prepared from the polymers. products of Examples 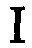 and 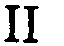 are expected to be of excellent quality with no background deposits and of high resolution over an extended number of imaging cycles exceeding, it is believed, about 75,000 imaging cycles.

Other toner compositions may be readily prepared by conventional means from the polymer and copolymer resins of the present invention including colored toners, single component toners, multi-component toners, toners containing special performance additives, and the like.

The aforementioned stable free radical agent moderated polymerization process may be applied to a wide range of organic monomers to provide novel toner resin materials with desirable electrophotographic properties, coatings, and the like. For example, the block copolymers can be selected as dispersants for photoreceptor pigments. The multimodal resins can be utilized for low melting toner resins and certain monomodal resins may be used to modify the surface of carbon black and other pigment particles to render the pigment particles more miscible with a host polymer or dispersing medium. Moreover, narrow (PD) molecular weight resins, such as poly(styrene-butadiene), can be selected as improved toner resins for reprographic applications.

Other modifications of the present invention may occur to those skilled in the art based upon a review of the present application and these modifications, including equivalents thereof, are intended to be included within the scope of the present invention.

## Claims

1. A free radical polymerization process for the preparation of a block copolymer thermoplastic resin or resins comprising:
heating a first mixture comprised of a free radical initiator, a stable free radical agent, and at least one polymerizable monomer compound to form a first intermediate product resin;
cooling said first mixture;
isolating said first intermediate product resin;
adding to said first intermediate product resin a second mixture comprised of at least one polymerizable monomer compound, wherein said polymerizable monomer compound of said second mixture is different from said polymerizable monomer compound of said first mixture, and wherein there is formed a combined mixture;
heating said combined mixture to form a third mixture comprised of a block copolymer thermoplastic resin comprised of a first product resin formed from said first intermediate product resin and added said second monomer;
cooling said third mixture;
isolating said block copolymer thermoplastic resin from said third mixture; and
optionally washing and drying said block copolymer thermoplastic resin, and wherein said heating is accomplished at a temperature of from about 40 to about 100°C in the presence of ultrasonic irradiation.

2. A free radical polymerization process for the preparation of a multiblock copolymer thermoplastic resin or resins comprising:
heating a first mixture comprised of a free radical initiator, a stable free radical agent, and at least one polymerizable monomer compound to form a first intermediate product resin;
optionally cooling said first mixture;
optionally isolating said first intermediate product resin;
adding to said first intermediate product resin a second mixture comprised of at least one polymerizable monomer compound, wherein said polymerizable monomer compound of said second mixture is dissimilar than said polymerizable monomer compound of said first mixture, to form a combined mixture;
heating said combined mixture to form a third mixture comprised of a block copolymer thermoplastic resin comprised of a first product resin formed from said first intermediate product resin and added said second monomer;
cooling said third mixture;
optionally isolating said third mixture;
sequentially repeating the preceding steps of adding, heating and cooling, N times, to form a fourth mixture containing a multiblock copolymer thermoplastic resin or resins having N+2 blocks and wherein N is the number of times said sequence is repeated;
optionally isolating said multiblock copolymer thermoplastic resin from said fourth mixture; and
optionally washing and drying said multiblock copolymer thermoplastic resin, and wherein said multiblock copolymer thermoplastic resin possesses a narrow polydispersity, and wherein the heating is at a temperature of from about 40 to about 100°C, and which heating is accomplished in the presence of ultrasonic irradiation.

3. A free radical polymerization process in accordance with claim 1 wherein the resin product possesses a narrow polydispersity and is obtained in excellent conversion, which conversion is from about 50 to about 95 percent and which polydispersity is from about 1.1 to about 1.8.

4. A process in accordance with claim 1 wherein the heating is conducted as a monomer suspension in water or as a monomer suspension in a polar liquid which is not miscible with said monomer compound.

5. A process in accordance with claim 1 wherein the block copolymer thermoplastic resin product has a polydispersity of from about 1.05 to about 1.95.

6. A process in accordance with claim 1 wherein the heating is accomplished for a period of time of from about 10 minutes to 20 hours.

7. A process in accordance with claim 1 wherein said free radical initiator is selected from the group consisting of organic peroxides, azobisalkylnitriles, peroxycarbonates, and mixtures thereof.

8. A process in accordance with claim 1 wherein the stable free radical agent is comprised of a nitroxide stable free radical.

9. A process in accordance with claim 1 wherein the stable free radical agent is comprised of nitroxide stable free radicals selected from the group consisting of 2,2,5,5-tetramethyl-1-pyrrolidinyloxy and derivatives thereof, 2,2,6,6-tetramethyl-1-piperidinyloxy and derivatives thereof, 4,4-dimethyl-1-oxazolidinyloxy and derivatives thereof, N,N-dialkyl nitroxides and derivatives thereof, and mixtures thereof.

10. A process in accordance with claim 1 wherein the stable free radical agent to free radical initiator molar ratio is from between about 0.5:1 to about 20:1.

11. A process in accordance with claim 1 wherein the stable free radical agent to free radical initiator molar ratio is from about 1:1 to about 5:1.

12. A process in accordance with claim 1 wherein the monomer to free radical initiator molar ratio is from about 10:1 to about 10,000:1.

13. A process in accordance with claim 1 wherein said monomer to polymer conversion is from about 50 to about 95 percent and the polydispersity is from about 1.1 to about 1.6 and wherein from one to three monomers are selected.

14. A process in accordance with claim 1 wherein the monomer compound for the first mixture is a styrene and the monomer for the second mixture is an acrylate.

15. A process in accordance with claim 1 further comprising adding an organic sulfonic, phosphoric or carboxylic acid during heating of said mixture thereby increasing the rate of formation of said thermoplastic resin or resins; or further comprising adding a tertiary amine promoter compound to said mixture thereby increasing the rate of dissociation of said free radical initiator and optionally wherein said free radical initiator is an organic peroxide.

16. A process in accordance with claim 1 wherein the ultrasonic irradiation is accomplished with an ultrasonic bath supplying medium intensity ultrasonic energy of about 20 to about 50 kHz with a power of about 200 to about 400 Watts, or with a titanium horn supplying medium intensity ultrasonic energy of about 20 to about 50 kHz with a power of about 200 to about 450 Watts.

17. A process in accordance with claim 1 wherein the molar ratio of monomer to stable free radical agent to free radical initiator is from about 10:0.5:1 to about 10,000:5:1 or from about 300:1.3:1 to about 7,000:1.3:1.

18. A process in accordance with claim 1 wherein the stable free radical agent is 4-oxo-2,2,6,6-tetramethyl-1-piperidinyloxy, and the free radical initiator is azobisisobutyronitrile.

19. A process in accordance with claim 1 wherein the free radical initiator is benzoyl peroxide.

20. A process in accordance with claim 1 wherein the heating is from about 55 to about 70°C, the polydispersity is from about 1.1 to about 1.6, and the conversion is from about 50 to about 95 percent, and wherein the free radical initiator and the stable free radical are added as separate components.

21. A process in accordance with claim 2 wherein N is from 1 to about 20, and wherein the mixture of thermoplastic resins optionally possess a modality of from about 2 to about 5.

22. A process in accordance with claim 2 wherein the polydispersity is from 1.1 to 1.3.

23. A process in accordance with claim 2 wherein a stable free radical does not initiate polymerization.

24. A process in accordance with claim 2 wherein the free radical initiator is benzoyl peroxide or azobisisobutyronitrile.

25. A process in accordance with claim 2 wherein the stable free radical agent is comprised of a nitroxide stable free radical.

26. A process in accordance with claim 2 wherein the stable free radical agent is comprised of a nitroxide stable free radical selected from the group consisting of 2,2,5,5-tetramethyl-1-pyrrolidinyloxy, 2,2,6,6-tetramethyl-1-piperidinyloxy, 4,4-dimethyl-1-oxazolidinyloxy, and N,N-dialkyl nitroxides.

27. A process in accordance with claim 2 wherein the stable free radical agent is 2,2,6,6-tetramethyl-1-piperidinyloxy, and the free radical initiator is benzoyl peroxide.

28. A process in accordance with claim 2 wherein the stable free radical agent to free radical initiator molar ratio is from about 0.5:1 to about 3:1.

29. A process in accordance with claim 3 wherein the free radical initiator is benzoyl peroxide or azobisisobutyronitrile, or wherein the stable free radical agent is 4-oxo-2,2,6,6-tetramethyl-1-piperidinyloxy, and the free radical initiator is azobisisobutyronitrile or benzoyl peroxide.

30. A process in accordance with claim 25 wherein the ultrasonic irradiation is accomplished for a period of from about 30 minutes to about 6 hours with an ultrasonic bath supplying medium intensity ultrasonic energy of about 20 to about 50 kHz with a power of about 200 to about 400 Watts, or with a titanium horn supplying medium intensity ultrasonic energy of about 20 to about 50 kHz with a power of about 200 to about 450 Watts.

31. A process in accordance with claim 15 wherein the organic sulfonic acid is camphor sulfonic acid, or benzoic acid.

32. A process in accordance with claim 15 wherein the sulfonic, phosphoric or carboxylic acid is selected from the group consisting of acetic, propanoic, butanoic, p-chlorobenzoic, benzene sulfonic, naphthalene sulfonic, dodecyl benzene sulfonic, and mixtures thereof.

33. A process in accordance with claim 2 wherein the heating is from about 50 to about 70°C, the polydispersity is from 1.1 to 1.45, and the conversion is from about 50 to about 95 percent.

34. A process in accordance with claim 33 wherein the stable free radical agent is 2,2,6,6-tetramethyl-1-piperidinyloxy free radical and the free radical initiator is benzoyl peroxide.

35. A process in accordance with claim 1 wherein the mixture is cooled to about 25°C.

36. A process in accordance with claim 1 wherein the mixture is cooled to about 25°C.

37. A process in accordance with claim 2 wherein the resin product is isolated by precipitation in a nonsolvent, followed by filtration.

38. A process in accordance with claim 1 wherein the polymerization of the monomer to the resin product occurs without a Trommsdorff effect, or without an autopolymerization effect.

39. A process in accordance with claim 38 wherein the conversion is from 50 to about 95, and the polydispersity is from about 1.1 to about 1.8.

40. A process in accordance with claim 1 wherein cooling is accomplished by heat reduction, and wherein the mixture attains a temperature of about 25°C thereafter.

41. A process in accordance with claim 40 wherein the stable free radical initiator is benzoyl peroxide and the stable free radical is 2,2,6,6-tetramethyl-1-piperidinyloxy free radical.

42. A process in accordance with claim 1 wherein one monomer is selected, cooling is accomplished by reducing the temperature of the mixture, and the resin obtained is subjected to washing and drying.

43. A process in accordance with claim 1 wherein the ultrasonic irradiation intensity is from about 20 to about 50 kHz.

44. A process in accordance with claim 2 wherein the ultrasonic irradiation is accomplished with a horn supplying medium intensity ultrasonic energy of about 20 to about 50 kHz with a power of about 200 to about 450 Watts.

45. A process in accordance with claim 2 wherein cooling is accomplished by removal of the heating, or reducing the heating temperature.

46. A process for the preparation of toner, which comprises a copolymer resin obtained by
heating a first mixture comprised of a free radical initiator, a stable free radical agent, and at least one polymerizable monomer compound to form a first intermediate product resin;
cooling said first mixture;
isolating said first intermediate product resin;
adding to said first intermediate product resin a second mixture comprised of at least one polymerizable monomer compound, wherein said polymerizable monomer compound of said second mixture is different from said polymerizable monomer compound of said first mixture, and wherein there is formed a combined mixture;
heating said combined mixture to form a third mixture comprised of a block copolymer thermoplastic resin comprised of a first product resin formed from said first intermediate product resin and added said second monomer;
cooling said third mixture;
isolating said block copolymer thermoplastic resin from said third mixture; and
optionally washing and drying said block copolymer thermoplastic resin, and wherein said heating is accomplished at a temperature of from about 40 to about 100°C in the presence of ultrasonic irradiation, and subsequently mixing the resin obtained with pigment.

47. A process for the preparation of developer comprising mixing the toner of claim 46 with carrier particles.
